# FASCICULE DE BREVET EUROPEEN

(11) **EP 3 358 935 B1**
(45) Date de publication et mention de la délivrance du brevet: **04.03.2020**
(21) Numéro de dépôt: 16790668.4
(22) Date de dépôt: 05.10.2016
(51) Int. Cl.: A01F 25/13, A01F 25/16

(54) **DISPOSITIF POUR LE LESTAGE D'UNE BÂCHE DESTINÉE À RECOUVRIR UN ENSILAGE EN SILO**
VORRICHTUNG ZUM BESCHWEREN EINER ABDECKUNG ZUM ABDECKEN VON SILAGE IN EINEM SILO
DEVICE FOR WEIGHTING A COVER FOR COVERING SILAGE IN A SILO

(30) Priorité: 06.10.2015 FR 1559498
(43) Date de publication de la demande: 15.08.2018
(73) Titulaire: Solution Technique Caoutchouc, 44390 Nort sur Erdre (FR)
(72) Inventeur: BIORET, Jean-Vincent, 44390 Petit Mars (FR)
(74) Mandataire: Jacobacci Coralis Harle
(86) Numéro de dépôt international: PCT/FR2016/052561
(87) Numéro de publication internationale: WO 2017/060622

(56) Documents cités:
- FR-A1- 3 032 596
- GB-A- 2 298 670
- US-A- 775 505
- US-A- 1 102 466

## Description

### DOMAINE TECHNIQUE AUQUEL SE RAPPORTE L'INVENTION

La présente invention concerne de manière générale le domaine des techniques pour l'ensilage de fourrage en silo.
Elle concerne plus particulièrement les dispositifs pour le lestage d'une bâche destinée à recouvrir du fourrage rapporté dans un ensilage en silo.

### ARRIERE-PLAN TECHNOLOGIQUE

L'ensilage est une méthode de conservation du fourrage par voie humide, utilisant les phénomènes de fermentation lactique anaérobie.

La technique d'ensilage la plus largement utilisée est celle dite du « silo couloir ». Dans cette technique, le fourrage est tout d'abord haché, puis stocké à plat sur une aire bétonnée entre deux murs. Ce fourrage est ensuite compacté à l'aide d'engins adaptés (par exemple des tracteurs agricoles) afin d'expulser le maximum d'air interstitiel, avant la mise en anaérobiose définitive par recouvrement à l'aide d'une bâche lestée.

Une technique similaire peut être mise en œuvre soit avec un seul mur latéral limitant le silo (technique dite du « silo demi-taupinière ») soit en l'absence de mur limitant le silo, dite du « silo taupinière ».

Dans ces différentes techniques d'ensilage, la bâche de recouvrement est habituellement lestée au moyen d'une pluralité d'organes rapportés de type pneumatiques usagés, qui sont régulièrement répartis et juxtaposés sur sa surface supérieure.

Toutefois, en pratique, ces pneumatiques n'assurent pas toujours un lestage homogène de la bâche, conduisant parfois à des pertes de fourrage.

De plus, même si les pneumatiques usagés sont considérés comme peu dangereux, ils présentent malgré tout un danger pour l'environnement et la santé en particulier en cas d'incendie. Ils sont également des nids à rongeurs, serpents et insectes (abeilles, guêpes). En outre, ils dégradent la qualité des paysages et le cadre de vie.

Enfin, lorsqu'un agriculteur souhaite se débarrasser de ces pneumatiques « d'ensilage », cette élimination finale reste à sa charge avec notamment les difficultés, la complexité et le coût qui en découlent.

Les documents US-1 102 466 et GB- 2 298 670 concerne des dispositifs pour le lestage d'une bâche destinée à recouvrir du fourrage rapporté dans un ensilage en silo. Ces dispositifs de lestage comprennent un corps en forme de plaque et de moyens pour la solidarisation amovible dudit dispositif de lestage avec au moins un autre dispositif de lestage identique.

Mais, dans ce contexte, il serait particulièrement intéressant pour les agriculteurs de disposer de techniques et de matériels alternatifs pour le lestage des bâches d'ensilage, qui soient en plus aptes à assurer un lestage homogène pour assurer une conservation optimale du fourrage.

### OBJET DE L'INVENTION

Afin de remédier à ces inconvénients précités de l'état de la technique, la présente invention propose un dispositif pour le lestage d'une bâche destinée à recouvrir du fourrage rapporté dans un ensilage en silo.

Ce dispositif de lestage comprend un corps, dont une surface inférieure est destinée à reposer sur une partie de ladite bâche ; ce corps est équipé de moyens pour la solidarisation amovible dudit dispositif de lestage avec au moins un autre dispositif de lestage identique qui est destiné à être juxtaposé sur ladite bâche.

Le dispositif de lestage comporte au moins une sangle comprenant (i) une partie centrale, accolée et solidarisée sur une surface dudit corps, et (ii) une partie périphérique, libre par rapport audit corps et portant les moyens de solidarisation amovible.

Un tel dispositif de lestage a ainsi l'intérêt de permettre un lestage homogène de la bâche d'ensilage, optimisant ainsi le phénomène de conservation recherché de l'ensilage.

Ce dispositif de lestage a également l'intérêt d'être facilement manipulable et stockable, notamment par rapport à des pneumatiques qui sont encombrants et souvent difficiles à empiler.

D'autres caractéristiques non limitatives et avantageuses du dispositif de lestage conforme à l'invention, prises individuellement ou selon toutes les combinaisons techniquement possibles, sont les suivantes :
- le corps du dispositif comprend au moins une pièce intérieure qui est réalisée en au moins un matériau apte à subir une déformation élastique et qui est recouverte par une membrane ; ledit au moins un matériau élastique est avantageusement choisi parmi les matériaux élastomères et les matériaux élastomères plastiques ;
- le corps comprend une seule pièce intérieure, formant une plaque parallélépipédique, ou plusieurs pièces intérieures, juxtaposées les unes par rapport aux autres ;
- les moyens de solidarisation amovible comprennent au moins un couple d'éléments de liaison dont les deux éléments de liaison sont, d'une part, complémentaires l'un par rapport à l'autre et, d'autre part, ménagés de part et d'autre d'un axe de symétrie ;
- le dispositif de lestage comprend avantageusement deux couples de sangles qui sont orientés à l'équerre l'un par rapport à l'autre, les deux sangles de chacun desdits couples étant ménagées à distance l'une de l'autre, et chaque sangle comportant une partie centrale intercalée entre deux parties périphériques munies de moyens de solidarisation amovible ; de préférence, le dispositif de lestage comporte des moyens pour ajuster la position des moyens de solidarisation amovible sur la longueur des parties périphériques associées ;
- les moyens de solidarisation amovible sont ménagés au niveau de la surface inférieure dudit corps ;
- le corps a un contour comprenant quatre côtés formant un ensemble rectangulaire ou carré ; dans ce cas, les moyens de solidarisation amovible sont avantageusement ménagés au niveau de chacun desdits quatre côtés de contour ; encore dans ce cas, le corps a des côtés dont la longueur est comprise entre 500 mm et 2500 mm.

La présente invention concerne encore un système pour la couverture du fourrage dans un ensilage en silo, comprenant une bâche adaptée à l'ensilage, et une pluralité de dispositifs de lestage selon l'invention.

L'invention propose également un procédé pour l'ensilage d'un fourrage en silo, recouvert par une bâche.

Selon l'invention, la bâche est elle-même recouverte par une pluralité de dispositifs de lestage selon l'invention, juxtaposés les uns par rapport aux autres et solidarisés les uns avec les autres par le biais de leurs moyens de solidarisation amovible pour former un maillage.

Les moyens de solidarisation amovible des dispositifs de lestage associés sont avantageusement recouverts par le corps desdits dispositifs de lestage.

Certains au moins des dispositifs de lestage périphériques, situés sur le pourtour de la bâche, coopèrent avantageusement avec des moyens d'ancrage par le biais de moyens de réglage en tension.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue générale et en perspective d'un silo couloir, dont le fourrage est recouvert par une bâche lestée au moyen d'un maillage de dispositifs de lestage selon l'invention ;
- la figure 2 est une vue partielle et agrandie de la figure 1, pour montrer plus en détails le maillage de dispositifs de lestage selon l'invention ;
- la figure 3 représente, vu en perspective et par-dessous, l'un des dispositifs de lestage selon l'invention ;
- la figure 4 est une vue de la face inférieure du dispositif de lestage selon la figure 3 ;
- la figure 5 est une vue de côté, sur chant, du dispositif de lestage selon la figure 3 ;
- la figure 6 est une vue partielle et en coupe du dispositif de lestage selon la figure 5;
- la figure 7 représente, vus en perspective et par-dessous, deux dispositifs de lestage selon l'invention qui sont assemblés par le biais de leurs moyens de solidarisation amovible ;
- la figure 8 est une vue générale et en perspective d'un silo de type demi-taupinière, dont le fourrage est recouvert par une bâche lestée au moyen d'un maillage de dispositifs de lestage selon l'invention ;
- la figure 9 est une vue générale et en perspective d'un silo de type taupinière, dont le fourrage est recouvert par une bâche lestée au moyen d'un maillage de dispositifs de lestage selon l'invention ;
- la figure 10 représente, vue en perspective et par-dessus, une variante de réalisation du dispositif de lestage selon l'invention ;
- la figure 11 est une vue partielle et en coupe du dispositif de lestage selon la figure 10.

Le dispositif de lestage selon l'invention, décrit plus en détails par la suite, est destiné à assurer le lestage d'une bâche d'ensilage destinée à recouvrir du fourrage rapporté dans un silo.

Le fourrage englobe les plantes destinées à l'alimentation des animaux (notamment des bovins et des ovins), et adaptées à être conservées par une technique d'ensilage.

Par « ensilage », on entend la méthode de conservation du fourrage par voie humide, utilisant une fermentation lactique anaérobie.

La présente invention concerne en particulier les techniques d'ensilage dites « en silo ».

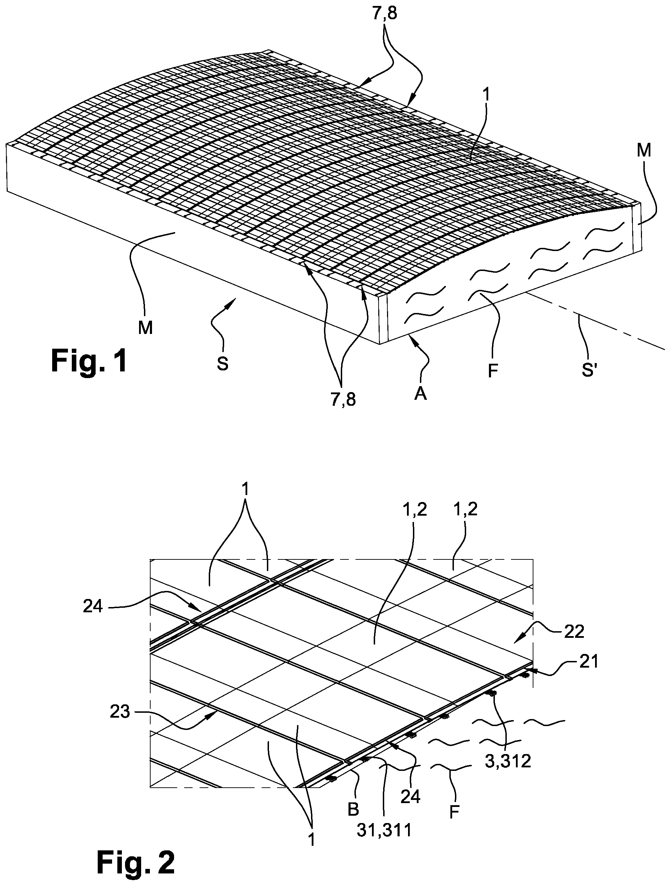

Ainsi, les figures 1 et 2 représentent le cas d'un ensilage réalisé en silo-couloir S.

Un tel silo-couloir S comprend, de manière classique en soi, une aire bétonnée A délimitée par deux murs latéraux M s'étendant à distance l'un de l'autre.

Le fourrage F à ensiler est haché et stocké à plat au sein du silo-couloir S. Ce fourrage est en plus compacté afin d'expulser le maximum d'air interstitiel.

Une mise en anaérobiose définitive est assurée par le recouvrement de la surface supérieure du fourrage F à l'aide d'une bâche d'ensilage B.

Une telle bâche d'ensilage B est avantageusement réalisée en un matériau étanche à l'air et opaque, épousant les contours du fourrage F, à savoir par exemple une bâche réalisée en polyéthylène.

Pour un ensilage optimal, une pluralité de dispositifs de lestage 1 selon l'invention est répartie sur la bâche d'ensilage B, avantageusement sur toute la surface de cette bâche d'ensilage B recouvrant le fourrage F.

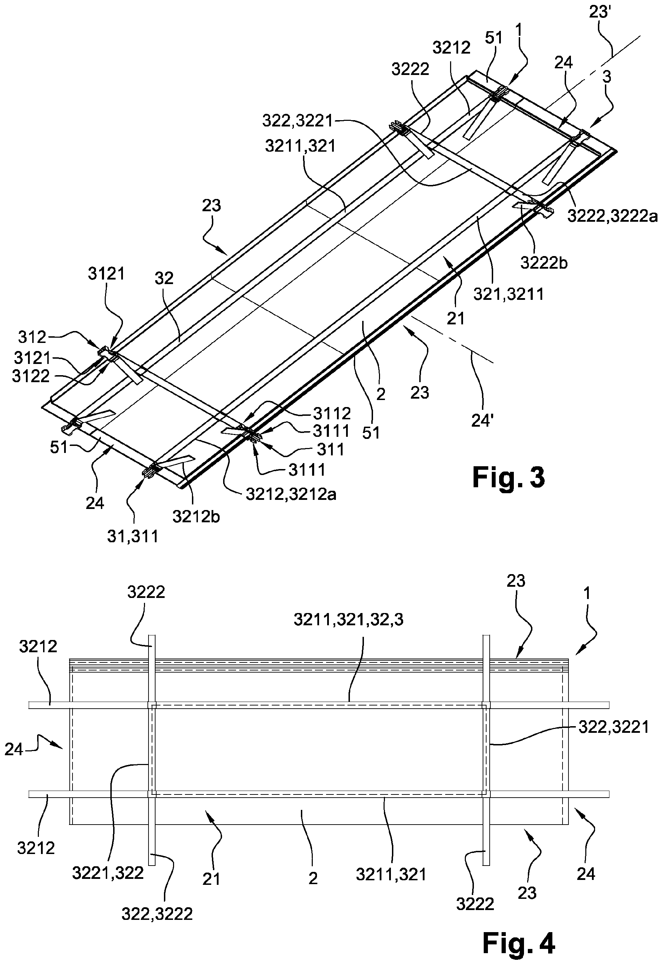

L'un de ces dispositifs de lestage 1 est représenté en détails sur les figures 3 à 6. Les autres dispositifs de lestage 1 sont avantageusement identiques, ou tout au moins similaires.

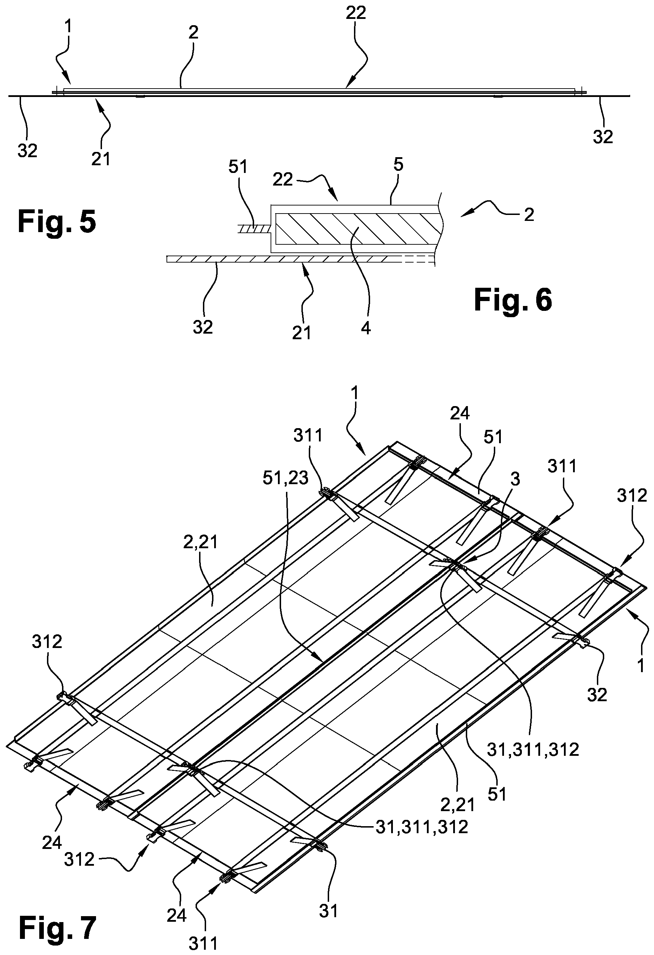

Le dispositif de lestage 1 comprend un corps 2, ici en forme de plaque, qui est équipé de moyens 3 pour sa solidarisation amovible avec au moins un autre dispositif de lestage 1 identique (figure 7) qui est destiné à être juxtaposé sur la bâche B.

Le corps 2 a deux surfaces opposées (figures 2 et 5 notamment) :
- une surface inférieure 21 destinée à reposer sur une partie de la bâche B, et
- une surface supérieure 22, destinée à être orientée à l'opposé de cette bâche B et vers le ciel.

Le corps 2 a ici une forme générale parallélépipédique, avec deux surfaces rectangulaires 21, 22 opposées.

Ce corps 2 comporte encore un contour (ou chant) comprenant quatre côtés formant un ensemble rectangulaire ou carré, à savoir en l'espèce :
- un couple de côtés longitudinaux 23, s'étendant parallèlement et à distance l'un de l'autre, et
- un couple de côtés transversaux 24, s'étendant parallèlement et à distance l'un de l'autre.

Ces côtés 23, 24 définissent deux axes de symétrie 23', 24' (figure 3) :
- un axe de symétrie longitudinal 23' qui passe par le milieu des côtés transversaux 24, et parallèlement aux côtés longitudinaux 23, et
- un axe de symétrie transversal 24', qui passe par le milieu des côtés longitudinaux 23, parallèlement aux côtés transversaux 24.

Les côtés 23, 24 ont avantageusement une longueur comprise entre 500 mm et 2500 mm.

En l'espèce, la longueur des côtés longitudinaux 23 est supérieure à la longueur des côtés transversaux 24.

Par exemple, l'épaisseur du corps 2 (entre ses surfaces 21, 22) est comprise entre 15 et 25 mm ; la longueur des côtés longitudinaux 23 est comprise entre 1500 et 2500 mm ; la longueur des côtés transversaux 24 est comprise entre 500 et 700 mm.

Comme illustré schématiquement sur la figure 6, le corps 2 se compose de plusieurs éléments :
- une pièce intérieure 4, de forme générale parallélépipédique, dont les dimensions correspondent à celles du corps 2, et
- une membrane 5, recouvrant et enveloppant cette pièce intérieure 4.

La pièce intérieure 4 est réalisée dans au moins un matériau apte à subir une déformation élastique, par exemple choisi parmi :
- les matériaux élastomères, à savoir par exemple le caoutchouc naturel, le caoutchouc « naturel synthétique » (ou poly-isoprène synthétique), le polybutadiène ou le styrène - butadiène, ou
- les matériaux plastiques ou élastomères thermoplastiques (TPE), à savoir par exemple le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Cette pièce intérieure 4 peut être réalisée mono-matériau ou multi-matériau.

La membrane 5 peut consister en une membrane étanche, avantageusement une barrière au liquide. De manière alternative, la membrane 5 est perméable au liquide (par exemple une membrane tissée).

Cette membrane 5 peut également être barrière aux rayonnements ultraviolets (UV).

Cette membrane 5 est souple, avantageusement réalisée en un matériau choisi parmi les polyéthylènes.

Cette membrane 5 est maintenue autour de la pièce intérieure 4 grâce à un ensemble de coutures et/ou de soudures, ménagées par exemple le long de bandes 51 (ou lèvres) de ladite membrane 5 qui entourent et longent le chant de cette pièce intérieure 4.

De préférence, les dimensions et la composition de ce corps 2, en particulier de sa pièce intérieure 4, sont ajustées pour obtenir un poids compris entre 25 et 60 kg.

Par ailleurs, les moyens de solidarisation amovible 3 comprennent plusieurs couples 31 d'éléments de liaison 311, 312 portés par des sangles 32 (ces éléments de liaison 311, 312 ne sont pas représentés sur les figures 4 à 6).

Par « moyens de solidarisation amovible », on entend en particulier des moyens dont les éléments constitutifs peuvent être manipulés dans des états associé/dissocié, manuellement ou éventuellement avec un outil adapté, sans dégradation de ces éléments lors de cette manipulation.

Pour leur protection, ces moyens de solidarisation amovible 3 sont ménagés au niveau de la surface inférieure 21 du corps 2, et de préférence au niveau du contour périphérique de cette surface inférieure 21.

Cette caractéristique permet un masquage de ces moyens de solidarisation amovible 3 par les corps 2 (et en particulier par les bandes 51 précitées), lorsque les dispositifs de lestage 1 sont répartis sur la bâche B à lester (figure 2 notamment).

Les moyens de solidarisation amovible 3 sont alors protégés par les corps 2 attenants (et en particulier par les bandes 51 précitées), notamment à l'encontre des intempéries et des rayonnements solaires susceptibles de provoquer une détérioration rapide. Les moyens de solidarisation amovible 3 sont en plus ainsi protégés d'une désactivation involontaire.

Chaque couple 31 d'éléments de liaison 311, 312 consiste ici en une boucle à ouverture rapide, classique en soi, encore couramment désignée « clip à sac à dos » ou « clip à sangle ».

Chaque couple 31 d'éléments de liaison 311, 312 comprend ainsi deux pièces 311, 312 qui sont complémentaires l'une par rapport à l'autre (figure 3) :
- une pièce mâle 311, comprenant deux languettes latérales élastiques 3111 munies d'ergots de verrouillage, et
- une pièce femelle 312, comprenant deux logements latéraux 3121 qui sont destinés à recevoir les languettes latérales élastiques 3111 d'une pièce mâle 311 rapportée pour leur solidarisation et verrouillage.

Chaque pièce mâle 311 est manœuvrable en translation par rapport à la pièce femelle 312 complémentaire, pour obtenir deux configurations :
- une configuration verrouillée (ou de « clipsage » ou associée), dans laquelle les logements latéraux 3121 de la pièce femelle 312 reçoivent les languettes latérales élastiques 3111 de la pièce mâle 311, pour assurer une solidarisation du couple d'éléments de liaison 31 avec des normes de sécurité élevées (notamment figure 7), et
- une configuration déverrouillée (ou de « déclipsage » ou dissociée), depuis la configuration verrouillée, par une simple pression sur les languettes latérales élastiques 3111 de la pièce mâle 311, emboîtées dans les logements latéraux 3121 de la pièce femelle 312, pour autoriser la manœuvre en écartement des éléments de liaison 311, 312 (notamment figure 3).

Pour former un maillage ou quadrillage de dispositifs de lestage 1, les moyens de solidarisation amovible 3 sont ménagés et répartis au niveau de chacun des quatre côtés 23, 24 du dispositif de lestage 1 (figure 3).

En particulier, chaque côté 23, 24 comporte les deux éléments de liaison complémentaires : une pièce mâle 311 et une pièce femelle 312.

Au sein de chaque côté 23, 24, les deux pièces 311, 312 sont ménagées à distance l'une de l'autre, de part et d'autre, et symétriquement, de l'axe de symétrie 24', 23' passant par ledit côté 23, 24.

De plus, pour chaque couple de côté 23, 24, une pièce mâle 311 d'un premier côté 23, 24 et une pièce femelle 312 d'un second côté 23, 24 sont agencées de part et d'autre, et symétriquement, par rapport à l'axe de symétrie 23', 24' parallèle audit couple 23, 24.

Les sangles 32 sont convenablement agencées pour obtenir cette répartition particulière des éléments de liaison 311, 312.

Ainsi, les moyens de solidarisation 3 comprennent deux couples de sangles 32 qui sont orientés à l'équerre l'un par rapport à l'autre :
- un premier couple de sangles 321, longitudinal, parallèle aux côtés longitudinaux 23, et
- un second couple de sangles 322, transversal, parallèle aux côtés transversaux 24.

Les deux sangles 321, 322 de chacun des couples sont ménagées parallèlement et à distance l'une de l'autre, de part et d'autre des axes de symétrie 23', 24' respectivement.

Chaque sangle 321, 322 comporte, respectivement, une partie centrale 3211, 3221 qui est intercalée entre deux parties périphériques 3212, 3222 munies des éléments de liaison 311, 312.

Chaque sangle 321, 322 comprend ainsi :
- une partie centrale 3211, 3221, accolée et solidarisée sur la surface inférieure 21 du corps 2, en l'espèce sur la membrane 5, par exemple par couture et/ou collage (illustré par le trait discontinu sur la figure 4), et
- deux parties périphériques 3212, 3222, libres par rapport au corps 2 et portant chacune l'un des éléments de liaison 311, 312 d'un couple 31.

Au sein de chaque sangle 321, 322, une première partie périphérique 3212, 3222 porte la pièce mâle 311 et une seconde partie périphérique 3212, 3222 porte la pièce femelle 312 complémentaire.

Les parties périphériques 3212, 3222 libres facilitent la manipulation des moyens de solidarisation 3.

Ces parties périphériques 3212, 3222 forment également des moyens pour ajuster la position des éléments de liaison 311, 312 sur la longueur des parties périphériques 3212, 3222 associées.

Pour cela, chaque élément de liaison 311, 312 comporte ici une embase de serrage 3112, 3122, au travers de laquelle est enroulée l'une des parties périphériques 3212, 3222 (figure 3).

Cette partie périphérique 3212, 3222 est ainsi mobile en translation au sein de cette embase de serrage 3112, 3122 ; ceci permet l'ajustement de la position de l'élément de liaison 311, 312 sur la longueur de la partie périphérique 3212, 3222 associée.

De telles sangles 321, 322 équipées d'un couple 31 d'éléments de liaison 311, 312, ont l'intérêt d'assurer une résistance efficace aux efforts de traction.

L'embase de serrage 3112, 3122, classique en soi, est du type de celles équipant notamment les clips de sacs à dos (ou clips à sangle), pour ajuster la longueur de la sangle associée.

Chaque partie périphérique 3212, 3222 d'une sangle 321, 322 comporte ainsi deux brins, s'étendant de part et d'autre de l'élément de liaison 311, 312 associé :
- un brin aller 3212a, 3222a dont une extrémité est raccordée à la partie centrale 3211, 3221, et
- un brin retour 3212b, 3222b, formant un brin de traction libre, partant de l'embase de serrage 3112, 3122.

La structure de cette embase de serrage 3112, 3122, classique en soi, permet ainsi une manœuvre en translation de la partie périphérique 3212, 3222, dans deux sens, au sein de l'embase de serrage 3112, 3122.

Lorsqu'une traction est exercée par un opérateur sur le brin retour 3212b, 3222b, le brin aller 3212a, 3222a est raccourci avec un allongement proportionnel de ce brin retour 3212b, 3222b. On obtient ainsi un déplacement de l'élément de liaison 311, 312 associé vers la partie centrale 3211, 3221.

Cette embase de serrage 3112, 3122 assure également un verrouillage automatique, en translation, sur la partie périphérique 3212, 3222 pour le maintien de la position de l'élément de liaison 311, 312 sur la longueur de la partie périphérique 3212, 3222 une fois ajustée.

Il est également possible de manœuvrer en sens inverse l'élément de liaison 311, 312, de sorte que le brin retour 3212b, 3222b soit raccourci, avec un allongement proportionnel du brin aller 3212a, 3222a. On obtient ainsi un déplacement de l'élément de liaison 311, 312 associé en éloignement par rapport à la partie centrale 3211, 3221.

En pratique, dans un silo couloir, tel que représenté sur les figures 1 et 2, le fourrage F est recouvert par un système de couverture comprenant :
- la bâche B adaptée à l'ensilage, et
- une pluralité de dispositifs de lestage 1 selon l'invention, tels que décrits ci-dessus.

En pratique, la bâche B est tout d'abord rapportée pour recouvrir le fourrage F.

Cette bâche B est ensuite elle-même recouverte par les dispositifs de lestage 1. Du fait de leur caractère souple et élastique, ces dispositifs de lestage 1 épousent, au moins approximativement, la bâche B sous-jacente.

En particulier, les dispositifs de lestage 1 sont agencés de sorte que :
- les côtés longitudinaux 23 des dispositifs de lestage 1 s'étendent parallèlement à l'axe longitudinal S' du silo couloir S et
- les côtés transversaux 24 des dispositifs de lestage 1 s'étendent perpendiculairement à l'axe longitudinal S' du silo couloir S.

De plus, comme on peut l'observer en particulier sur la figure 2, ces dispositifs de lestage 1 sont juxtaposés latéralement les uns par rapport aux autres, pour former un maillage rappelant une sorte de quadrillage.

Ces dispositifs de lestage 1 forment ainsi une sorte de couverture recouvrant la bâche d'ensilage B.

Dans ce cadre :
- les côtés longitudinaux 23 de deux dispositifs de lestage 1 juxtaposés latéralement sont attenants l'un par rapport à l'autre, et
- les côtés transversaux 24 de deux dispositifs de lestage 1 juxtaposés longitudinalement sont attenants l'un par rapport à l'autre.

Les côtés 23, 24 juxtaposés peuvent être en appui/butée l'un sur l'autre, voire écartés de quelques millimètres (par exemple au maximum de 50 mm). L'espace intercalaire est fermé par les bandes 51 précitées.

Pour obtenir ce maillage, les dispositifs de lestage 1 sont rapportés successivement les uns à côté des autres, et ils sont solidarisés les uns avec les autres par le biais de leurs moyens de solidarisation amovible 3.

Cette solidarisation peut être observée sur la figure 7 dans le cas de deux dispositifs de lestage 1 juxtaposés latéralement, avec un couplage par le biais des éléments de liaison 311, 312 ménagés au niveau de leurs côtés longitudinaux 23 attenants.

Une solidarisation similaire est mise en œuvre pour deux dispositifs de lestage 1 juxtaposés longitudinalement, avec un couplage par le biais des éléments de liaison 311, 312 ménagés au niveau des côtés transversaux 24 attenants.

L'ajustement en écartement entre les dispositifs de lestage 1 peut être obtenu par un réglage de la position des éléments de liaison 311, 312 sur la longueur de leurs parties périphériques 3212, 3222 de sangle 32 associée.

Les moyens de solidarisation amovible 3 associés sont alors recouverts par le corps 2 des dispositifs de lestage 1 et/ou par les bandes 51, pris en sandwich entre ces corps 2 (de préférence les bandes 51) et la bâche B.

Pour participer à une mise en pression optimale, certains au moins des dispositifs de lestage 1 périphériques, situés sur le pourtour de la bâche B et ici bordant les murs latéraux M, coopèrent avec des moyens d'ancrage 7 par le biais de moyens de réglage en tension 8.

Par exemple, les moyens d'ancrage 7 consistent en une boucle à ouverture rapide apte à coopérer avec un élément de liaison 311, 312 attenant du dispositif de lestage 1 ; les moyens de réglage en tension 8 sont formés par exemple par une sangle avec tendeur passant par cette boucle et fixée au mur.

Si l'un des dispositifs de lestage 1 doit être remplacé ou si le lestage doit être retiré en tout ou partie, il suffit pour l'opérateur de déverrouiller les moyens de solidarisation amovible 3 du dispositif de lestage 1 à retirer, par rapport aux dispositifs de lestage 1 attenants.

En particulier, une ligne transversale de dispositifs de lestage 1 (perpendiculaire à l'axe longitudinal S' du silo couloir S) peut facilement être retirée de manière à tenir compte de la progression du front de prélèvement dans le fourrage F.

Il suffit pour cela de séparer les éléments de liaison 311, 312 du dispositif de lestage 1 à retirer par rapport aux éléments de liaison 311, 312 des dispositifs de lestage 1 attenants.

Les dispositifs de lestage 1 retirés ont l'intérêt de pouvoir être stockés de manière superposée les uns sur les autres, à plat, de manière stable et avec un encombrement réduit.

De manière alternative, chaque dispositif de lestage 1 peut être recourbé sur lui-même : les côtés opposés 23 ou 24 sont rapprochés et sont maintenus en connectant les éléments de liaison 311, 312 complémentaires.

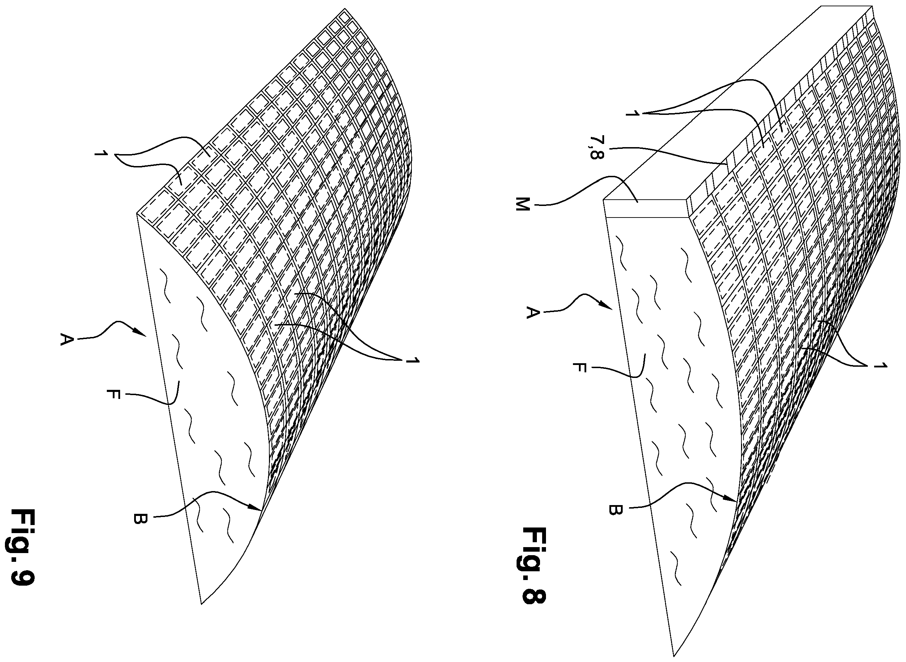

Le dispositif de lestage 1 selon l'invention peut être utilisé dans différentes autres variantes d'ensilage en silo, de manière à lester une bâche d'ensilage B recouvrant un fourrage F, par exemple :
- pour un ensilage en silo demi-taupinière (figure 8), délimité par un unique mur latéral M, ou
- pour un ensilage en silo taupinière (figure 9), dépourvu de murs latéraux.

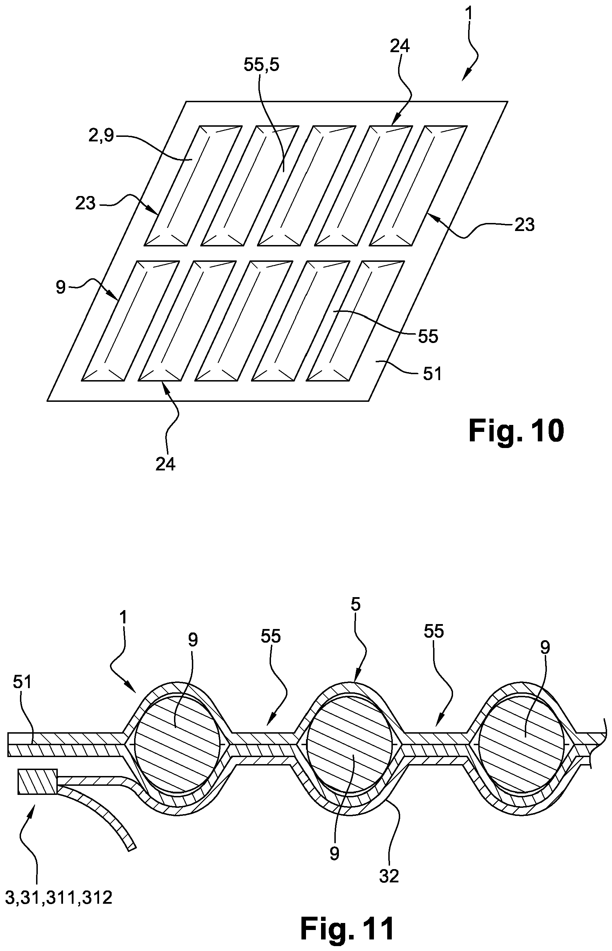

Les figures 10 et 11 montrent une variante de réalisation du dispositif de lestage 1 selon l'invention.

Le dispositif de lestage 1 est similaire à celui décrit ci-dessus en relation avec les figures 3 à 7.

En effet, là encore, le dispositif de lestage 1 comprend un corps 2 qui est équipé de moyens 3 pour sa solidarisation amovible avec au moins un autre dispositif de lestage 1 identique qui est destiné à être juxtaposé sur la bâche B (les moyens de solidarisation 3 sont visibles sur la figure 11).

Ce dispositif de lestage 1 se distingue seulement par le fait que son corps 2 comporte plusieurs pièces intérieures 9.

Le corps 2 se compose ainsi de plusieurs éléments : - des pièces intérieures 9 dont les dimensions correspondent ensemble à celles du corps 2, et - une membrane 5, recouvrant et enveloppant ces pièces intérieures 9.

Ces pièces intérieures 9 ont chacune en forme générale de cylindre, avec par exemple un diamètre compris entre 10 cm et 20 cm.

Les pièces intérieures 9 sont aussi réalisées dans au moins un matériau apte à subir une déformation élastique, par exemple choisi parmi les matériaux élastomères et les matériaux plastiques ou élastomères thermoplastiques (TPE).

Ces pièces intérieures 9 sont juxtaposées les unes par rapport aux autres, ici parallèlement les unes par rapport aux autres. En d'autres termes, les pièces intérieures 9 sont disposées de sorte que leurs axes longitudinaux respectifs s'étendent parallèlement les uns par rapport aux autres.

Ces pièces intérieures 9 sont en plus avantageusement agencées dans un seul et même plan général (les pièces intérieures 9 s'inscrivent ainsi dans un volume de forme générale parallélépipédique).

En fonction de leur longueur, ces pièces intérieures 9 peuvent être réparties sur une ou plusieurs rangées (par exemple deux rangées selon la figure 10). Chaque rangée comprend plusieurs pièces intérieures 9.

De préférence, les dimensions et la composition de ce corps 2, en particulier de ses pièces intérieures 9, sont ajustées pour obtenir un poids compris entre 25 et 60 kg. De même, là encore, le corps 2 a un contour comprenant quatre côtés 23, 24 formant un ensemble rectangulaire ou carré.

La membrane 5 peut consister en une membrane étanche, avantageusement une barrière au liquide. De manière alternative, la membrane 5 est perméable au liquide (par exemple une membrane tissée).

Cette membrane 5 est maintenue autour de chaque pièce intérieure 9 grâce à un ensemble de coutures et/ou de soudures, ménagées par exemple le long de bandes 55 de ladite membrane 5 qui entourent et longent chaque pièce intérieure 9.

En d'autres termes, les pièces intérieures 9 sont logées dans des portions de la membrane 5 qui ont une forme de manchon.

On retrouve également les bandes 51 (ou lèvres) de la membrane 5 qui entourent et longent les pièces intérieures 9, pour masquer les moyens de solidarisation amovible 3.

Les moyens de solidarisation amovible 3 sont identiques à ceux décrits ci-dessus.

A ce sujet, en substance, les moyens de solidarisation amovible 3 comportent plusieurs couples 31 d'éléments de liaison 311, 312 portés par des sangles 32. De préférence, chaque côté 23, 24 du contour comporte un tel couple 31 d'éléments de liaison 311, 312.

Les moyens de solidarisation 3 comprennent encore deux couples de sangles 32 qui sont orientés à l'équerre l'un par rapport à l'autre.

De manière générale, les dispositifs de lestage 1 selon l'invention permettent une pression homogène sur la bâche B, assurant un ensilage optimal du fourrage F.

Les dispositifs de lestage 1 sont en plus particulièrement stables sur la bâche B, tout en autorisant le retrait ou le remplacement d'un ou plusieurs de ces dispositifs de lestage 1 de manière simple et rapide.

## Revendications

1. Dispositif pour le lestage d'une bâche destinée à recouvrir du fourrage rapporté dans un ensilage en silo,
lequel dispositif de lestage (1) comprend un corps (2), dont une surface inférieure (21) est destinée à reposer sur une partie de ladite bâche (B),
lequel corps (2) est équipé de moyens (3) pour la solidarisation amovible dudit dispositif de lestage (1) avec au moins un autre dispositif de lestage (1) identique qui est destiné à être juxtaposé sur ladite bâche (B),
**caractérisé en ce qu'**il comporte au moins une sangle (32) comprenant :
- une partie centrale (3211, 3221), accolée et solidarisée sur une surface (21) dudit corps (2), et
- une partie périphérique (3212, 3222), libre par rapport audit corps (2) et portant lesdits moyens de solidarisation amovible (3).

2. Dispositif de lestage selon la revendication 1, **caractérisé en ce qu'**il comporte deux couples de sangles (321, 322) qui sont orientés à l'équerre l'un par rapport à l'autre,
**en ce que** les deux sangles (321, 322) de chacun desdits couples sont ménagées à distance l'une de l'autre,
et **en ce que** chaque sangle (321, 322) comporte une partie centrale (3211, 3221) intercalée entre deux parties périphériques (3212, 3222) munies desdits moyens de solidarisation amovible (3).

3. Dispositif de lestage selon la revendication 2, **caractérisé en ce qu'**il comporte des moyens (3112, 3122) pour ajuster la position des moyens de solidarisation amovible (3) sur la longueur des parties périphériques (3212, 3222) associées.

4. Dispositif de lestage selon l'une quelconque des revendications 1 à 3, **caractérisé en ce que** ledit corps (2) comprend au moins une pièce intérieure (4, 9) qui est réalisée en au moins un matériau apte à subir une déformation élastique et qui est recouverte par une membrane (5).

5. Dispositif de lestage selon la revendication 4, **caractérisé en ce que** ledit corps (2) comprend :
- une seule pièce intérieure (4), formant une plaque parallélépipédique, ou
- plusieurs pièces intérieures (9) juxtaposées les unes par rapport aux autres.

6. Dispositif de lestage selon l'une quelconque des revendications 4 ou 5, **caractérisé en ce que** ledit au moins un matériau élastique est choisi parmi les matériaux élastomères et les matériaux élastomères plastiques.

7. Dispositif de lestage selon l'une quelconque des revendications 1 à 6, **caractérisé en ce que** les moyens de solidarisation amovible (3) comprennent au moins un couple (31) d'éléments de liaison (311, 312) dont les deux éléments de liaison (311, 312) sont, d'une part, complémentaires l'un par rapport à l'autre et, d'autre part, ménagés de part et d'autre d'un axe de symétrie (23', 24').

8. Dispositif de lestage selon l'une quelconque des revendications 1 à 7, **caractérisé en ce que** les moyens de solidarisation amovible (3) sont ménagés au niveau de ladite surface inférieure (21) dudit corps (2).

9. Dispositif de lestage selon l'une quelconque des revendications 1 à 8, **caractérisé en ce que** le corps (2) a un contour comprenant quatre côtés (23, 24) formant un ensemble rectangulaire ou carré et **en ce que**, de préférence, les moyens de solidarisation amovible (3) sont ménagés au niveau de chacun desdits quatre côtés (23, 24) dudit contour.

10. Dispositif de lestage selon la revendication 9, **caractérisé en ce que** le corps (2) a des côtés (23, 24) dont la longueur est comprise entre 500 mm et 2500 mm.

11. Système pour la couverture du fourrage dans un ensilage en silo, comprenant :
- une bâche (B) adaptée à l'ensilage, et
- une pluralité de dispositifs de lestage (1) selon l'une quelconque des revendications 1 à 10.

12. Procédé pour l'ensilage d'un fourrage en silo, recouvert par une bâche (B), **caractérisé en ce que** ladite bâche (B) est elle-même recouverte par une pluralité de dispositifs de lestage (1) selon l'une quelconque des revendications 1 à 10, juxtaposés les uns par rapport aux autres et solidarisés les uns avec les autres par le biais de leurs moyens de solidarisation amovible (3) pour former un maillage.

13. Procédé pour l'ensilage d'un fourrage en silo, selon la revendication 12, **caractérisé en ce que** les moyens de solidarisation amovible (3) des dispositifs de lestage (1) associés sont recouverts par le corps (2) desdits dispositifs de lestage (1).

14. Procédé pour l'ensilage d'un fourrage en silo, selon l'une quelconque des revendications 12 ou 13, **caractérisé en ce que** certains au moins des dispositifs de lestage (1) périphériques, situés sur le pourtour de la bâche (B), coopèrent avec des moyens d'ancrage (7) par le biais de moyens de réglage en tension (8).

## Patentansprüche

1. Vorrichtung zum Beschweren einer Abdeckung zum Abdecken von einer Silage in einem Silo zugeführtem Futter,
wobei die Ballastvorrichtung (1) einen Korpus (2) aufweist, von dem eine untere Oberfläche (21) dazu bestimmt ist, auf einem Teil der Abdeckung (B) zu ruhen,
wobei der Korpus (2) mit Mitteln (3) zur abnehmbaren Befestigung der Ballastvorrichtung (1) an wenigstens einer weiteren identischen Ballastvorrichtung (1), die dazu bestimmt ist, auf der Abdeckung (B) angrenzend angeordnet zu werden, ausgestattet ist,
**dadurch gekennzeichnet, daß** sie wenigstens einen Gurt (32) aufweist, der
- einen an einer Oberfläche (21) des Korpus (2) anliegenden und befestigten zentralen Teil (3211, 3221) und
- einen gegenüber dem Korpus (2) freien und die Mittel (3) zur abnehmbaren Befestigung tragenden äußeren Teil (3212, 3222)
aufweist.

2. Ballastvorrichtung gemäß Anspruch 1, **dadurch gekennzeichnet, daß** sie zwei Paar Gurte (321, 322) aufweist, die zueinander rechtwinklig ausgerichtet sind,
daß die beiden Gurte (321, 322) jedes der Paare mit Abstand zueinander angeordnet sind,
und daß jeder Gurt (321, 322) einen die Mittel (3) zur abnehmbaren Befestigung tragenden, zwischen zwei äußeren Teilen (3212, 3222) liegenden zentralen Teil (3211, 3221) aufweist.

3. Ballastvorrichtung gemäß Anspruch 2, **dadurch gekennzeichnet, daß** sie Mittel (3212, 3122) zum Einstellen der Position der Mittel (3) zur abnehmbaren Befestigung gemäß der Länge der zugehörigen äußeren Teile (3212, 3222) aufweist.

4. Ballastvorrichtung gemäß einem der Ansprüche 1 bis 3, **dadurch gekennzeichnet, daß** der Korpus (2) wenigstens ein inneres Teil (4, 9) aufweist, das aus wenigstens einem Material gefertigt ist, das geeignet ist, eine elastische Verformung zu vertragen, und das mit einer Membrane (5) bedeckt ist.

5. Ballastvorrichtung gemäß Anspruch 4, **dadurch gekennzeichnet, daß** der Korpus (2)
- ein einziges, eine quaderförmige Platte bildendes inneres Teil (4) aufweist oder
- mehrere, aneinandergereihte innere Teile (9) aufweist.

6. Ballastvorrichtung gemäß einem der Ansprüche 4 oder 5, **dadurch gekennzeichnet, daß** das wenigstens eine elastische Material aus den Elastomermaterialien und den plastischen Elastomermaterialien ausgewählt ist.

7. Ballastvorrichtung gemäß einem der Ansprüche 1 bis 6, **dadurch gekennzeichnet, daß** die Mittel (3) zur abnehmbaren Befestigung wenigstens ein Paar (31) Verbindungselemente (312, 322) aufweisen, von denen beide Verbindungselemente (312, 322) einerseits zueinander komplementär sind und andererseits beiderseits einer Symmetrieachse (23', 24') angeordnet sind.

8. Ballastvorrichtung gemäß einem der Ansprüche 1 bis 7, **dadurch gekennzeichnet, daß** die Mittel (3) zur abnehmbaren Befestigung im Bereich der unteren Oberfläche (21) des Korpus (2) angeordnet sind.

9. Ballastvorrichtung gemäß einem der Ansprüche 1 bis 8, **dadurch gekennzeichnet, daß** der Korpus (2) eine Kontur mit vier eine rechteckige oder quadratische Gesamtheit bildende Seiten (23, 24) aufweist, und daß die Mittel (3) zur abnehmbaren Befestigung im Bereich jeder der vier Seiten (23, 24) der Kontur angeordnet sind.

10. Ballastvorrichtung gemäß Anspruch 9, **dadurch gekennzeichnet, daß** der Korpus (2) Seiten (23, 24) aufweist, deren Länge zwischen 500 mm und 2500 mm beträgt.

11. System zum Abdecken des Futters in einer Silage in einem Silo mit
- einer an die Silage angepaßten Abdeckung (B) und
- einer Anzahl Ballastvorrichtungen (1) gemäß einem der Ansprüche 1 bis 10.

12. Verfahren zum Einlagern von mit einer Abdeckung (B) abgedecktem Futter in einem Silo, **dadurch gekennzeichnet, daß** die Abdeckung (B) selbst mit einer Anzahl aneinandergereihter und mittels deren Mitteln (3) zur abnehmbaren Befestigung verbundenen Ballastvorrichtungen (1) gemäß einem der Ansprüche 1 bis 10 abgedeckt ist, um ein Maschengitter zu bilden.

13. Verfahren zum Einlagern von Futter in einem Silo gemäß Anspruch 12, **dadurch gekennzeichnet, daß** die Mittel (3) zur abnehmbaren Befestigung der zugehörigen Ballastvorrichtungen (1) durch den Korpus (2) der Ballastvorrichtungen (1) abgedeckt sind.

14. Verfahren zum Einlagern von Futter in einem Silo gemäß einem der Ansprüche 12 oder 13, **dadurch gekennzeichnet, daß** wenigstens manche der am Umfang der Abdeckung (B) am Rande liegenden Ballastvorrichtungen (1) über Spannungseinstellmittel (8) mit Verankerungsmitteln (7) zusammenwirken.

## Claims

1. A device for weighting a cover intended for covering silage fodder in a silo,
said weighting device (1) comprising a body (2), a lower surface (21) of which is intended to rest on a portion of said cover (B),
said body (2) being equipped with means (3) for detachably fastening said weighting device (1) to at least another identical weighting device (1), which is intended to be juxtaposed on said cover (B),
**characterized in that** it includes at least one strap (32) comprising:
- a central portion (3211, 3221), placed against and fastened to a surface (21) of said body (2), and
- a peripheral portion (3212, 3222), free with respect to said body (2) and carrying said detachable fastening means (3).

2. The weighting device according to claim 1, **characterized in that** it includes two couples of straps (321, 322) that are arranged perpendicular to each other,
**in that** the two straps (321, 322) of each of said couples are arranged remote from each other,
and **in that** each strap (321, 322) includes a central portion (3211, 3221) interposed between two peripheral portions (3212, 3222) provided with said detachable fastening means (3).

3. The weighting device according to claim 2, **characterized in that** it includes means (3112, 3122) for adjusting the position of the detachable fastening means (3) along the length of the associated peripheral portions (3212, 3222).

4. The weighting device according to any one of claims 1 to 3, **characterized in that** said body (2) comprises at least one inner part (4, 9) that is made of at least one material capable of undergoing an elastic deformation and that is covered with a membrane (5).

5. The weighting device according to claim 4, **characterized in that** said body (2) comprises:
- a single inner part (4), forming a parallelepipedal plate, or
- several inner parts (9) juxtaposed to each other.

6. The weighting device according to any one of claims 4 or 5, **characterized in that** said at least one elastic material is chosen among the elastomeric materials and the plastic elastomeric materials.

7. The weighting device according to any one of claims 1 to 6, **characterized in that** the detachable fastening means (3) comprise at least one couple (31) of connecting elements (311, 312), whereof the two connecting elements (311, 312) are, on the one hand, complementary to each other and, on the other hand, arranged on either side of an axis of symmetry (23', 24').

8. The weighting device according to any one of claims 1 to 7, **characterized in that** the detachable fastening means (3) are arranged at said inner surface (21) of said body (2).

9. The weighting device according to any one of claims 1 to 8, **characterized in that** said body (2) has a contour comprising four sides (23, 24) forming a rectangular or square unit and **in that**, preferably, the detachable fastening means (3) are arranged at each of said four sides (23, 24) of said contour.

10. The weighting device according to claim 9, **characterized in that** said body (2) has sides (23, 24), whose length is comprised between 500 mm and 2500 mm.

11. A system for covering the silage fodder in a silo, comprising:
- a cover (B) suitable for silage, and
- a plurality of weighting devices (1) according to any one of claims 1 to 10.

12. A method for ensiling fodder into a silo, covered with a cover (B), **characterized in that** said cover (B) is itself covered with a plurality of weighting devices (1) according to any one of claims 1 to 10, juxtaposed to each other and fastened to each other through their detachable fastening means (3) to form a meshing.

13. The method for ensiling fodder into a silo according to claim 12, **characterized in that** the detachable fastening means (3) of the associated weighting devices (1) are covered by the body (2) of said weighting devices (1).

14. The method for ensiling fodder into a silo according to any one of claims 12 or 13, **characterized in that** at least some of the peripheral weighting devices (1), located on the perimeter of the cover (B), cooperate with anchoring means (7) through tension adjustment means (8).
